(19) Europäisches Patentamt
European Patent Office
Office européen des brevets

(11) **EP 3 506 557 B1**

(12) **FASCICULE DE BREVET EUROPEEN**

(45) Date de publication et mention
de la délivrance du brevet:
**01.07.2020 Bulletin 2020/27**

(51) Int Cl.:
***H04L 9/08*** *(2006.01)*     ***H04L 9/32*** *(2006.01)*

(21) Numéro de dépôt: **18215898.0**

(22) Date de dépôt: **26.12.2018**

(54) **MÉTHODE D'ÉCHANGE DE CLÉS PAR CONTRAT INTELLIGENT DÉPLOYÉ SUR UNE CHAINE DE BLOCS**

VERFAHREN ZUM SCHLÜSSELAUSTAUSCH MITTELS EINES IN EINER BLOCKCHAIN EINGESETZTEN SMART-CONTRACTS

METHOD OF KEY EXCHANGE VIA A SMART CONTRACT DEPLOYED OVER A BLOCKCHAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2017 FR 1763394**

(43) Date de publication de la demande:
**03.07.2019 Bulletin 2019/27**

(73) Titulaire: **Commissariat à l'énergie atomique et aux énergies alternatives
75015 Paris (FR)**

(72) Inventeur: **HENNEBERT, Christine
38054 GRENOBLE Cedex 9 (FR)**

(74) Mandataire: **Brevalex
56, Boulevard de l'Embouchure
B.P. 27519
31075 Toulouse Cedex 2 (FR)**

(56) Documents cités:
- **MCCORRY PATRICK ET AL: "Authenticated Key Exchange over Bitcoin", 9 décembre 2015 (2015-12-09), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047412487, ISSN: 0302-9743 ISBN: 978-3-642-16065-3 [extrait le 2015-12-09] * abrégé * * page 8; tableau 1 * * page 9; figure 2 * * Section 3.3 "Diffie-Hellman-over-Bitcoin Protocol"; page 10 ***
- **P Sivakumar ET AL: "Privacy based decentralized Public Key Infrastructure (PKI) implementation using Smart contract in Blockchain", 2nd Advance Workshop on Blockchain: Technology, Applications, Challenges, 17 décembre 2017 (2017-12-17), pages 1-6, XP055497247, Extrait de l'Internet: URL:https://isrdc.iitb.ac.in/blockchain/wo rkshops/2017-iitb/papers/paper-11%20-%20De centralized%20PKI%20in%20blockchain%20and % 20Smart%20contract.pdf [extrait le 2018-08-03]**
- **Tatsuya Kyogoku ET AL: "A Note on Authenticated Key Exchange in Cryptocurrency", 2016 Symposium on Cryptography and Information Security (SCIS 2016), 22 janvier 2016 (2016-01-22), pages 19-22, XP055497256, Extrait de l'Internet: URL:https://security-kouza.github.io/paper /SCIS2016_kyogoku.pdf [extrait le 2018-08-03]**

    **(Cont. page suivante)**

- BUI THANH ET AL: "Key Exchange with the Help of a Public Ledger", 29 novembre 2017 (2017-11-29), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047455716, ISSN: 0302-9743 ISBN: 978-3-642-16065-3 [extrait le 2017-11-29] * abrégé * * Chapitre 4: "Public-Ledger-Based Key Exchange"; pages 128-131 *

**Description**

**DOMAINE TECHNIQUE**

La présente invention concerne de manière générale la cryptographie et plus particulièrement la génération d'un canal sécurisé entre pairs au moyen d'une clé secrète. Elle concerne également la technique des chaines de blocs (*blockchain*).

**ÉTAT DE LA TECHNIQUE ANTÉRIEURE**

La génération d'un canal sécurisé en dispositifs distants, également dénommés dans la suite « pairs », suppose le partage d'une clé secrète entre ces dispositifs. Ce partage peut être réalisé par une distribution manuelle des clés, préalablement à toute communication sur le canal, ou bien au moyen d'un protocole d'échange de clés de type Diffie-Hellmann utilisant un cryptosystème asymétrique. On rappelle que dans un protocole d'échange de clés de type Diffie-Hellman, chaque dispositif distant dispose d'un couple de clés asymétrique (clé privée, clé publique). La clé privée d'un dispositif émetteur est conservée secrète par ce dernier et n'est en particulier jamais divulguée au dispositif destinataire. Elle sert à chiffrer ou signer des messages et à identifier le dispositif émetteur. En revanche, la clé publique est connue du dispositif destinataire et sert à déchiffrer des messages ou à vérifier la signature du dispositif émetteur. Le but du protocole d'échange de clés est de permettre, à partir d'éléments publics d'un cryptosystème échangés sur un canal non sécurisé, à chaque dispositif distant de calculer indépendamment une même clé secrète qui servira à établir un canal sécurisé entre eux.

Lorsque le cryptosystème est basé sur une courbe elliptique $E(\mathbb{F}_q)$ définie sur un corps fini $\mathbb{F}_q$ et caractérisé par les paramètres de domaine $(q,a,b,G,n,h)$ où $q$ est le nombre d'éléments du corps, $a,b$ sont les paramètres de la courbe elliptique, $G$ est un point générateur, $n$ est l'ordre de $G$ dans le groupe additif $E(\mathbb{F}_q)$,

$$ h = \frac{\left\lfloor \left| E(\mathbb{F}_q) \right| \right\rfloor}{n} $$

est le cofacteur de $G$ dans ce groupe, $|E(\mathbb{F}_q)|$ est l'ordre du groupe $E(\mathbb{F}_q)$. Chaque dispositif distant peut choisir une clé privée $sk$ parmi les entiers$[1,n-1]$, la clé publique correspondante étant donnée par les coordonnées du point $Pk = sk.G$. On rappelle que rechercher $sk$ à partir de $Pk$ revient à rechercher une solution au problème ECLDP (*Elliptic Curve Discrete Logarithm Problem*), actuellement impossible à résoudre dans un temps polynomial.

Si Alice et Bob sont les deux pairs correspondant aux deux dispositifs distants, un protocole d'échange de clés de Diffie-Hellmann utilisant un cryptosystème elliptique (protocole ECDH) peut être décrit par les étapes suivantes :

Alice choisit un nombre entier $a$ qui restera secret, calcule la clé publique éphémère, $P_a = a.G$, et la transmet à Bob.

De manière similaire, Bob choisit un entier $b$ qui restera secret, calcule la clé publique éphémère, $P_b = b.G$, et la transmet à Alice.

A la réception de $P_b$, Alice calcule $a.P_b = ab.G$.

A la réception de $P_a$, Bob calcule $b.P_a = ba.G$.

Alice et Bob partagent désormais un élément secret consistant en un point de la courbe elliptique, $ab.G$. Ils peuvent par exemple appliquer une fonction de hachage, préalablement convenue entre eux, à l'une des coordonnées du point en question pour obtenir une clé de session symétrique avec laquelle ils chiffrent les données sur le canal.

Une limitation importante du protocole d'échange de clés ci-dessus est qu'il n'est pas immun contre une attaque de type Man-In-the-Middle. En effet, un attaquant, Eve, peut s'interposer entre Alice et Bob, faire croire à Alice qu'elle échange avec Bob et à Bob qu'il échange avec Alice. En mettant en œuvre le protocole décrit ci-dessus, Eve choisit un premier entier $x$ et partage un premier élément secret $axG$ avec Alice, puis choisit un second entier $y$ et partage un second élément secret $byG$ avec Bob. Eve peut ainsi créer un premier canal sécurisé avec Alice et un second canal sécurisé avec Bob. Lorsqu'Alice croit transmettre des données de manière sécurisée à Bob, elle les fournit en fait à Eve. Réciproquement, lorsque Bob croit transmettre des données de manière sécurisée à Alice, il les transmet en fait également à Eve.

Une solution connue pour remédier à ce type d'attaque est d'identifier l'émetteur de chaque clé publique. Ainsi, Alice transmet à Bob non seulement sa clé publique éphémère $P_a = a.G$ mais aussi une signature numérique de $P_a$, signée avec sa clé privée (par exemple au moyen d'un algorithme ECDSA). Bob doit alors disposer de la clé publique d'Alice pour vérifier la signature en question. Si la vérification est positive, cela signifie que la clé publique éphémère a bien été émise par Alice et non pas un tiers. Bien entendu, réciproquement, Bob transmet à Alice sa clé publique éphémère $P_b =b.G$ accompagnée de la signature de $P_b$ au moyen de la clé privée de Bob, et Alice procède à la vérification de cette signature au moyen de la clé publique de Bob pour authentifier la provenance de la clé publique éphémère.

Cette solution n'est toutefois que partiellement satisfaisante dans la mesure où la transmission de la clé publique d'Alice à Bob (ou celle de Bob à Alice) sur un canal non sécurisé est elle-même susceptible de faire l'objet d'une attaque de type « Man-in-the-Middle ». Afin de lier la clé publique d'un émetteur avec son identité, on utilise un certificat numérique (au format X.509 ou bien certificat implicite, par exemple) délivré par une autorité de certification. Il en résulte que le protocole de Diffie-Hellman nécessite la présence d'un tiers de confiance pour être robuste aux attaques de type « Man-in-the-Middle ».

Afin de se passer d'un tiers de confiance et en particulier d'une autorité de certification centralisée, il a été proposé de recourir à une chaine de blocs telle que Bitcoin pour effectuer un échange de clés selon le protocole de Diffie-Hellmann. On rappelle qu'une chaine de blocs est un registre distribué et sécurisé de toutes les transactions effectuées depuis le démarrage de la chaine. Une introduction complète à la chaine de blocs Bitcoin pourra être trouvée dans l'ouvrage de A.M. Antonopoulos intitulé « Mastering Bitcoin » publié en 2015 aux éditions O'Reilly.

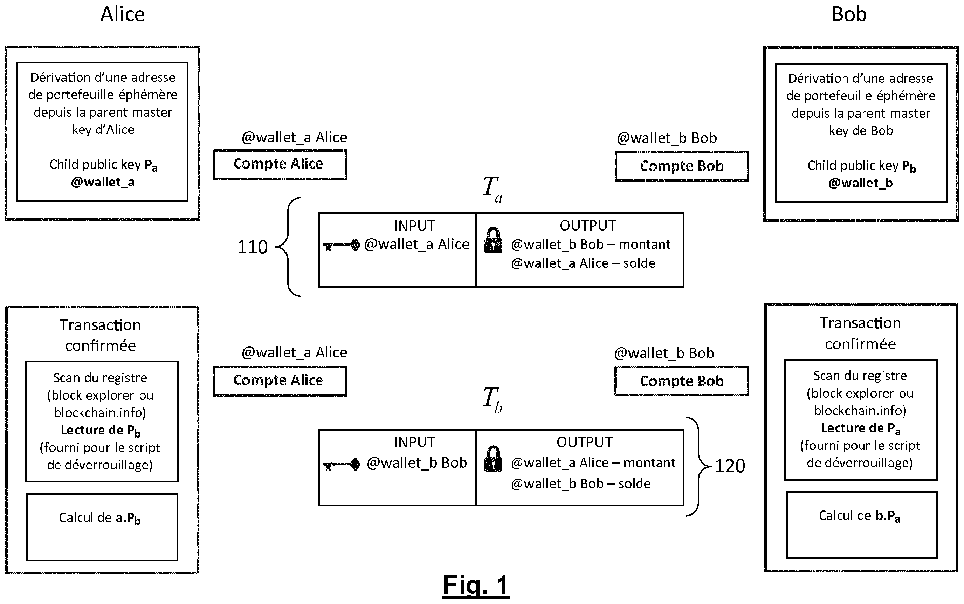

La Fig. 1 représente une telle méthode d'échange de clés authentifié par une chaine de blocs.

Préalablement à l'échange de clés, on suppose qu'Alice et Bob ont chacun généré de manière indépendante une clé privée (notée $a$ pour Alice et $b$ pour Bob) et, à partir de la clé publique correspondante ($P_a = aG$ pour Alice et $P_b = bG$ pour Bob), une adresse de portefeuille éphémère (notée @wallet_a Alice pour Alice et @wallet_b Bob pour Bob). Les adresses éphémères ne seront utilisées dans le cadre des transactions supportant cet échange. Les portefeuilles respectifs de Bob et Alice sont également supposés être crédités de cryptomonnaie en quantité suffisante.

Alice forme en 110 une transaction $T_a$ et celle-ci est diffusée aux nœuds du réseau Bitcoin. Après avoir été validée, incorporée dans un bloc et confirmée par minage, celle-ci fait partie du registre distribué (*distributed ledger*). De même, Bob forme en 120 une transaction $T_b$ et celle-ci est diffusée de proche en proche aux nœuds du réseau.

De manière générale, une transaction représente un transfert d'unités de cryptomonnaie d'une entrée (ou de plusieurs entrées) vers une sortie (ou vers plusieurs sorties). Une transaction est libellée en termes de UTXO (*Unspent Transaction Output*), chaque UTXO représentant un montant non dépensé par son propriétaire et étant verrouillé par un script de verrouillage. Pour pouvoir dépenser un UTXO, le propriétaire doit s'identifier en présentant à l'UTXO des éléments cryptographiques (généralement la clé publique et une signature générée à partir de la clé privée correspondante) sous la forme d'un script de déverrouillage. Si les éléments présentés dans le script de déverrouillage satisfont aux conditions spécifiées dans le script de verrouillage, la transaction est validée. On notera que dans Bitcoin, le script de déverrouillage le plus communément utilisé est *Pay-to-Public-Key-Hash* (P2PKH) et le script de verrouillage est *scriptSig.*

La transaction $T_a$ formée par Alice comprend en entrée une référence à un UTXO détenu à l'adresse de portefeuille @wallet_a Alice ainsi qu'un script de déverrouillage (représenté par une clé). Ce script de déverrouillage contient la clé publique éphémère d'Alice, $P_a$ et une signature de cette clé publique (plus précisément de la transaction dans laquelle la clé publique $P_a$ est substituée au script de déverrouillage, la transaction étant ensuite doublement hachée) au moyen de la clé privée correspondante, $a$.

La transaction $T_a$ comprend en sortie l'adresse de portefeuille du destinataire (Bob), soit @wallet_b Bob ainsi qu'un script de verrouillage (représenté par un cadenas sur la figure) que Bob pourra déverrouiller en fournissant, via un script de déverrouillage, les éléments cryptographiques (clé publique et signature) satisfaisant aux conditions fixées dans le script de verrouillage. Cette sortie de transaction crée un UTXO (@wallet_b Bob-montant) à l'adresse de portefeuille éphémère de Bob. On a également indiqué en sortie l'adresse de portefeuille éphémère d'Alice pour que celle-ci puisse récupérer dans son portefeuille le solde de la transaction (création d'un UTXO dans le portefeuille éphémère d'Alice).

De la même façon, la transaction $T_b$ comprend en entrée une référence à un UTXO détenu à l'adresse de portefeuille @wallet_b Bob, ainsi qu'un script de déverrouillage contenant la clé publique éphémère de Bob, $P_b$, et une signature de cette clé publique au moyen de la clé privée correspondante $b$.

En sortie, la transaction $T_b$ comprend en sortie l'adresse de portefeuille éphémère d'Alice @wallet_a Alice ainsi qu'un script de verrouillage (représenté par un cadenas sur la figure) qu'Alice pourra déverrouiller en fournissant les éléments cryptographiques satisfaisant aux conditions fixées dans le script de verrouillage. Cette sortie crée un UTXO (@wallet_a Alice-montant) à l'adresse de portefeuille éphémère d'Alice. Une deuxième sortie est prévue pour récupérer le solde sous forme d'un UTXO à l'adresse de portefeuille éphémère de Bob.

Les montants des UTXO @wallet_a Alice-montant et @wallet_b Bob-montant peuvent être choisis égaux pour équilibrer l'échange.

Une fois que les transactions $T_a$ et $T_b$ ont été validées, enregistrées dans la chaine de blocs et confirmées par minage, Alice (resp. Bob) scanne le registre distribué à la recherche de la transaction émise par Bob (resp. Alice). Alice récupère dans la partie entrée de $T_b$ la clé publique éphémère $P_b$ de Bob et, réciproquement, Bob récupère dans la partie entrée de $T_a$ la clé publique éphémère $P_a$ d'Alice. Alice calcule alors $aP_b = abG$ et Bob $bP_a = baG$ : Alice et Bob disposent par conséquent de la clé secrète partagée $abG$.

L'auditabilité du registre distribué permet à tous les utilisateurs (nœuds) de vérifier que les clés publiques éphémères utilisées dans cet échange n'ont jamais été utilisées auparavant, que la clé publique $P_a$ appartient bien à Alice (plus précisément est liée à l'adresse de portefeuille éphémère d'Alice) et que la clé publique $P_b$ appartient bien à Bob (plus précisément est liée à l'adresse de portefeuille éphémère de Bob). Ainsi, l'échange de clés entre Alice et Bob peut être authentifié par la chaine de blocs, sans intervention d'un tiers de confiance.

Toutefois, la génération systématique d'adresses de portefeuille éphémères à chaque échange de clés peut s'avérer compliquée à gérer et coûteuse en termes de ressources de calcul pour les dispositifs distants hébergeant ces portefeuilles.

L'article de Mc Corry et al. Intitulé « Authenticated key exchange over Bitcoin » publié en 2015 dans Chen. L, Matsuo S. (eds.) Security Standardisation Research. Lecture Notes in Computer Science, vol 9497. Springer, décrit une méthode d'échange de clés utilisant comme clés éphémères les clés qui sont utilisées pour signer les transactions. Cette méthode permet de se passer de la génération d'adresses de portefeuilles éphémères mais est en revanche sensible aux attaques contre les signatures ECDSA. L'article de Sivakumar et Singh intitulé "Privacy based decentralized Public Key Infrastructure (PKI) implementation using Smart contract in Blockchain" expose l'utilisation de contrats intelligents pour l'établissement d'une infrastructure de clé publique (PKI).

Les articles de Kyogoku et al, et Bui et Aura, intitulés respectivement "A note on Authenticated Key Exchange in Cryptocurrency" et "Key Exchange with the Help of a Public Ledger" exposent de l'arrière-plan technologique concernant l'échange de clés à l'aide d'une chaîne de blocs.

Un objet de la présente invention est par conséquent de proposer une méthode d'échange de clés entre pairs, authentifié par chaine de blocs et donc sans recours à un tiers de confiance, qui ne nécessite pas la génération de portefeuilles éphémères tout en étant robuste aux attaques cryptanalytiques.

## EXPOSÉ DE L'INVENTION

La présente invention est définie par une méthode d'échange de clés entre un premier utilisateur et un second utilisateur d'une chaine de blocs de transactions, la chaine de blocs étant adaptée à stocker des contrats intelligents, chaque utilisateur disposant d'une adresse de portefeuille lui permettant d'émettre et de recevoir des transactions, la chaine de blocs stockant un contrat intelligent comprenant :

une première fonction (*Fct A*) ayant pour argument au moins une clé publique et qui, lorsqu'elle est appelée par un utilisateur, stocke l'adresse de portefeuille de l'utilisateur qui l'appelle ainsi que la clé publique en argument ;

une seconde fonction (*Fct B*) ayant pour argument au moins une clé publique et qui, lorsqu'elle est appelée par un utilisateur, vérifie que l'adresse de portefeuille de l'utilisateur qui l'appelle est celle d'un utilisateur autorisé pour l'échange et, dans ce cas, stocke la clé publique en argument ;

une troisième fonction (*Fct C*) comprenant une première instruction vérifiant que l'adresse de portefeuille de l'utilisateur qui l'appelle est bien celle stockée par la première fonction et retournant dans ce cas à l'utilisateur la clé publique stockée par la seconde fonction, et une seconde instruction vérifiant que l'adresse de portefeuille de l'utilisateur qui l'appelle est bien celle stockée par la seconde fonction et retournant dans ce cas à l'utilisateur la clé publique stockée par la première fonction ; et que

(i) le premier utilisateur génère une première clé privée éphémère (*a*) et une première clé publique éphémère ($P_a$) correspondante au moyen d'un cryptosystème asymétrique ;

(ii) le second utilisateur génère une seconde clé privée éphémère (*b*) et une seconde clé publique éphémère ($P_b$) correspondante au moyen dudit cryptosystème asymétrique ;

(iii) le premier utilisateur forme une première transaction ($T_A$) contenant la première clé publique éphémère et la transmet à l'adresse du contrat intelligent, l'adresse du portefeuille du premier utilisateur ainsi que la première clé publique éphémère étant alors stockées dans le contrat intelligent, le bloc contenant le contrat intelligent étant ensuite miné ;

(iv) le second utilisateur forme une seconde transaction ($T_B$) contenant la seconde clé publique éphémère et la transmet à l'adresse du contrat intelligent, l'adresse du portefeuille du second utilisateur ainsi que la seconde clé publique éphémère étant alors stockées dans le contrat intelligent, le bloc contenant le contrat intelligent étant ensuite miné ;

(v) le premier utilisateur forme une requête sous la forme d'une troisième transaction et l'envoie à l'adresse du contrat intelligent, la seconde instruction de la troisième fonction du contrat intelligent lui retournant alors la seconde clé publique éphémère ;

(vi) le second utilisateur forme une requête sous la forme d'une troisième transaction et l'envoie à l'adresse du contrat intelligent, la seconde instruction de la troisième fonction du contrat intelligent lui retournant alors la première clé publique éphémère ;

(vii) le premier utilisateur calcule le produit de la première clé privée éphémère (*a*) avec la seconde clé publique éphémère ($P_b$) et le second utilisateur calcule (232) le produit de la seconde clé privée éphémère (*b*) avec la première clé publique éphémère ($P_a$) pour générer une clé secrète commune ($k_{ab}$).

La première fonction du contrat intelligent comprend de préférence en second argument l'adresse de portefeuille de l'utilisateur autorisé pour l'échange et la première transaction transmet l'adresse de portefeuille du second utilisateur comme second argument à la première fonction.

Avantageusement, pour équilibrer les coûts, lorsque le contrat intelligent retourne la première clé publique éphémère au second utilisateur ou la seconde clé publique éphémère au premier utilisateur, le contrat intelligent retourne aux premier et second utilisateurs la moitié du montant indiqué respectivement dans les première et seconde transactions.

Le contrat intelligent comprend avantageusement une quatrième fonction (*Fct timeout*) permettant au premier utilisateur de mettre fin au contrat intelligent si le second utilisateur n'a pas transmis la seconde transaction au contrat intelligent dans un délai prédéterminé (*timeout*) après que le premier utilisateur a transmis la première transaction au contrat intelligent.

La chaine de blocs peut être par exemple Hyperledger ou Ethereum.

Dans le cas d'Ethereum, l'une des première, deuxième, troisième et quatrième transactions peut comprendre un paramètre (STARTGAS) fixant la complexité maximale que l'exécution de la transaction est autorisée à consommer ainsi qu'un coût à payer en termes de complexité (GASPRICE).

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1, déjà décrite, représente de manière schématique un échange de clés entre pairs, authentifié par une chaine de blocs, selon une méthode connue de l'état de la technique ;
La Fig. 2 représente de manière schématique un échange de clés entre pairs, authentifié par un contrat intelligent déployé sur une chaine de blocs, selon un mode de réalisation de l'invention.

## EXPOSÉ DÉTAILLÉ DE MODES DE RÉALISATION PARTICULIERS

L'idée à la base de la présente invention est de faire appel à une chaine de blocs dans laquelle il est possible d'enregistrer des contrats intelligents, encore dénommés contrats autonomes ou *smart contracts*. Un exemple d'une telle chaine de blocs est Ethereum. Un autre exemple d'une telle chaine de blocs est Hyperledger.

Un contrat intelligent est un programme qui est déployé (c'est-à-dire stocké) dans la chaine de blocs et peut être exécuté par n'importe quel nœud du réseau. De manière générale, un contrat intelligent peut stocker des données, envoyer et recevoir des paiements, stocker un montant en cryptomonnaie (ether dans Ethereum), et exécuter des actions de manière autonome et décentralisée comme un agent logiciel. De manière générale, un contrat intelligent vérifie si un certain nombre de conditions d'entrée sont remplies et, dans l'affirmative, s'exécute automatiquement pour fournir un résultat codé dans le contrat.

Le contrat intelligent dont il est ici question est chargé d'authentifier les parties et de leur fournir les clés publiques en conséquence.

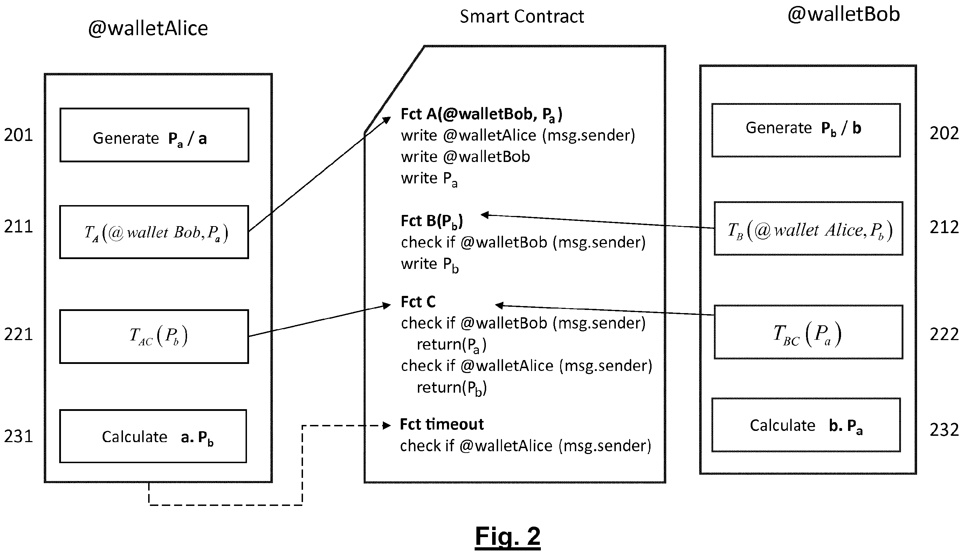

La Fig. 2 représente de manière schématique un échange de clés entre pairs, au moyen d'un contrat intelligent déployé sur une chaine de blocs, selon un mode de réalisation de l'invention.

On suppose qu'un premier utilisateur (ou premier pair), Alice et un second utilisateur (ou second pair) Bob disposent chacun d'une adresse de portefeuille, soit @wallet_Alice pour Alice et @wallet_Bob pour Bob, et qu'ils se sont communiqués ces adresses par exemple sous la forme de QR code, préalablement à l'exécution du contrat intelligent. En outre, Alice aura généré (en 201) une clé privée $a$ et une clé publique éphémère $P_a$ = $aG$ au moyen d'un cryptosystème sur courbe elliptique. De même, Bob aura généré (en 202) une clé privée $b$ et une clé publique éphémère $P_b$ = $bG$ au moyen du même cryptosystème. Alice et Bob pourront de manière plus générale utiliser un cryptosystème asymétrique pour générer leurs couples de clés privées et publiques.

La structure du contrat intelligent a été représentée en 250. Il comprend une première fonction *Fct A,* ayant pour argument au moins la clé publique éphémère d'un premier pair (Alice). Elle peut aussi comprendre en argument l'adresse de portefeuille du second pair (Bob). Cette première fonction, lorsqu'elle est appelée, stocke l'adresse de portefeuille du pair qui l'appelle ainsi que sa clé publique éphémère. Elle stocke également l'adresse de portefeuille du second pair si celle-ci lui est transmise en argument.

Le contrat intelligent comprend une seconde fonction *Fct B,* ayant pour argument au moins la clé publique du second pair (Bob). Elle peut aussi comprendre en argument l'adresse de portefeuille du premier pair (Alice). Cette seconde fonction, lorsqu'elle est appelée, stocke l'adresse du pair qui l'appelle ainsi que sa clé publique éphémère. Elle stocke également l'adresse du premier pair si celle-ci est transmise en argument.

Afin de définir les parties contractantes, *Fct A* comprendra en argument l'adresse de portefeuille du second pair ou *Fct B* comprendra en argument l'adresse du premier pair, ces deux situations n'étant bien entendu pas exclusives l'une de l'autre.

Lorsque la première fonction *Fct A* comprend en argument l'adresse de portefeuille du second pair, la fonction *Fct B* vérifie qu'elle est bien appelée par cette adresse de portefeuille avant de stocker la clé publique éphémère qui lui est fournie en argument.

Réciproquement, lorsque la seconde fonction *Fct B* comprend en argument l'adresse de portefeuille du premier pair, la première fonction *Fct A* vérifie qu'elle est bien appelée par cette adresse de portefeuille avant de stocker la clé publique qui lui est fournie en argument.

Le contrat intelligent comprend une troisième fonction, *Fct C*, ayant pour objet de vérifier l'identité des parties qui l'appellent et de transmettre les clés publiques suivant les conditions de distribution prévues dans le contrat. Dans le cas présent, la fonction *Fct C* contient une première instruction indiquant que, si elle est appelée par l'adresse de portefeuille du premier pair, elle lui retourne la clé publique éphémère du second pair. De manière similaire, elle contient une seconde instruction indiquant que, si elle est appelée par l'adresse de portefeuille du second pair, elle lui retourne la clé publique éphémère du premier pair.

Enfin, avantageusement, le contrat intelligent contient une quatrième fonction *Fct timeout*. Si au bout d'un délai prédéterminé, *timeout,* après que le premier pair (Alice) a enregistré sa clé publique éphémère en appelant la première fonction, le second pair (Bob) n'a pas encore appelé la seconde fonction pour retirer cette clé publique éphémère, le premier pair peut appeler la fonction *Fct timeout* pour mettre fin à l'exécution du contrat et, le cas échéant, récupérer sa mise. Réciproquement, si au bout d'un délai *timeout* après que le second pair (Bob) a enregistré sa clé publique éphémère en appelant la seconde fonction, le premier pair (Alice) n'a pas encore appelé la première fonction pour retirer cette clé publique éphémère, le second pair peut appeler la fonction *Fct timeout* pour mettre fin à l'exécution du contrat et, le cas échéant, récupérer sa mise.

Le processus d'échange de clés se déroule alors comme suit :

A l'étape 211, Alice forme une première transaction, $T_A$, et la transmet à l'adresse (de la première fonction) du contrat intelligent. Cette première transaction contient la clé publique éphémère d'Alice, $P_a$, et, dans le cas illustré, l'adresse de portefeuille (encore appelée adresse de compte dans Ethereum) de Bob, @wallet_Bob. La première transaction est signée numériquement par Alice à l'aide de sa clé privée. Lors de l'exécution de la première fonction, la signature d'Alice est vérifiée par le nœud qui l'exécute. Alternativement, la signature d'Alice peut être vérifiée par le contrat lui-même. L'adresse de portefeuille du pair à l'origine de la transaction, @wallet_Alice, l'adresse de portefeuille @wallet_Bob, ainsi que la clé publique éphémère $P_a$ sont enregistrés dans le contrat intelligent. Le contrat est ensuite « miné » pour valider son changement d'état.

A l'étape 212, Bob forme une seconde transaction, $T_B$, et la transmet à l'adresse de la seconde fonction du contrat intelligent. Cette seconde transaction contient la clé publique éphémère de Bob, $P_b$, et est signée par Bob au moyen de sa clé privée. Comme précédemment, la signature peut être vérifiée par le nœud qui exécute le contrat ou bien par le contrat lui-même. La seconde fonction compare l'adresse de portefeuille à partir de laquelle la seconde transaction a été émise, en l'occurrence @wallet_Bob, avec l'adresse de portefeuille stockée dans le contrat. En cas d'identité, la clé publique éphémère, $P_b$, est enregistrée dans le contrat intelligent. Le changement d'état du contrat est ensuite validé par le minage du bloc qui le contient.

Alice et Bob sont alors en mesure d'envoyer, indépendamment l'un de l'autre, respectivement en 221 et 222, une requête sous forme d'une transaction à l'adresse du contrat intelligent afin d'exécuter la troisième fonction, *Fct C*, du contrat intelligent. Plus précisément, Alice transmet une transaction $T_{AC}$ à la fonction *Fct C* et Bob transmet indépendamment une transaction $T_{BC}$ à cette même fonction.

La fonction *Fct C* compare l'adresse de portefeuille à l'origine de la transaction 221 (resp. 222) avec l'adresse de portefeuille stockée dans le contrat, à savoir @wallet_Alice (resp. @Wallet_Bob). En cas d'identité, le contrat intelligent retourne en argument la clé publique éphémère $P_b$ à Alice (resp. la clé publique éphémère $P_a$ à Bob).

Alice calcule alors en 231 la clé secrète $aP_b = abG$ à partir de la clé publique éphémère $P_b$ qu'elle vient de recevoir du contrat intelligent. Bob en fait de même en 232, $bP_a = baG$, à partir de la clé publique éphémère d'Alice qu'il vient de recevoir. Alice et Bob partagent ainsi la clé secrète $k_{ab} = abG$ pour sécuriser un canal de communication hors chaine de blocs, sécuriser la confidentialité de données ou encore l'utiliser à des fins d'authentification.

Dans le cas illustré, si Bob n'a pas fourni sa clé publique éphémère $P_b$ dans un délai prédéterminé, *timeout,* dont il a été préalablement informé par un processus hors chaîne , Alice peut transmettre une transaction à la quatrième fonction *Fct timeout* pour mettre fin au contrat.

De préférence, les fonctions *Fct A* et *Fct B* sont payantes, autrement dit les transactions 211 et 212 doivent transférer un montant convenu au contrat intelligent pour pouvoir les exécuter. Cette précaution permet notamment d'écarter les attaques par déni de service.

En outre, cette somme peut être restituée aux parties lors de l'exécution de la fonction *Fct C,* avec la remise des clés publiques $P_a$ et $P_b$. Plus précisément, on pourra prévoir que lorsqu'une partie appelle la *Fct C* avec succès et se fait remettre la clé publique dont elle est le destinataire, le contrat restitue aux parties la moitié de leur mise. Ainsi, chacune des parties est avertie lorsque la clé publique qu'elle a enregistrée dans le contrat a été remise à l'autre partie. La restitution de la moitié de la mise joue le rôle d'un acquittement pour la partie concernée.

De manière optionnelle, les transactions 211-212, 221-222 peuvent inclure un paramètre fixant la complexité maximale (paramètre STARTGAS dans Ethereum), en nombre d'étapes ou de cycles d'horloge, que l'exécution de la transaction est autorisée à consommer ainsi qu'un coût à payer en termes de complexité (paramètre GASPRICE dans Ethereum). L'ajout de ces paramètres permet d'exiger de chaque utilisateur qu'il paie les ressources qu'il consomme et donc de lutter contre les attaques de type « déni de service » obtenues en créant des boucles infinies.

Le second mode de réalisation se généralise sans difficulté à un échange de clés entre une pluralité quelconque de pairs de manière à ce qu'ils puissent notamment créer entre eux, deux à deux, des canaux sécurisés indépendants.

Pour ce faire, Alice initie le processus et fournit à la fonction *Fct A,* outre sa clé publique éphémère, $P_a$, les parties impliquées dans le contrat intelligent sous la forme d'une liste d'adresses de portefeuilles.

Chacune des parties enregistrées peut ensuite s'identifier auprès du contrat intelligent et faire exécuter la fonction *Fct B* pour stocker dans le contrat sa clé publique éphémère.

Enfin, chaque partie enregistrée dans le contrat peut exécuter la fonction *Fct C* et récupérer la clé publique des autres parties. A partir de sa propre clé privée et des clés publiques ainsi récupérées, chaque partie peut calculer une clé secrète partagée avec une autre partie.

Le tableau ci-dessous donne un exemple d'échange de clés, au moyen d'un contrat intelligent, entre quatre parties Alice, Bob, Charlie et Dave.

On remarque que le contrat intelligent permet de générer six clés secrètes, chaque clé secrète correspondant à un canal de communication entre deux parties au contrat.

| Alice | Bob | Charlie | Dave | clé partagée |
|-------|------|---------|------|--------------|
| $aP_b$ | $bP_a$ | | | $abG$ |
| $aP_c$ | | $cP_a$ | | $acG$ |
| $aP_d$ | | | $dP_a$ | $adG$ |
| | $bP_c$ | $cP_b$ | | $bcG$ |
| | $bP_d$ | | $dP_b$ | $bdG$ |
| | | $cP_d$ | $dP_c$ | $cdG$ |

**Revendications**

1. Méthode d'échange de clés entre un premier utilisateur et un second utilisateur d'une chaine de blocs de transactions, la chaine de blocs étant adaptée à stocker des contrats intelligents, chaque utilisateur disposant d'une adresse de portefeuille lui permettant d'émettre et de recevoir des transactions, **caractérisée en ce que** la chaine de blocs contient un contrat intelligent comprenant :

    une première fonction (*Fct A*) ayant pour argument au moins une clé publique et qui, lorsqu'elle est appelée par un utilisateur, stocke l'adresse de portefeuille de l'utilisateur qui l'appelle ainsi que la clé publique en argument ;
    une seconde fonction (*Fct B*) ayant pour argument au moins une clé publique et qui, lorsqu'elle est appelée par un utilisateur, vérifie que l'adresse de portefeuille de l'utilisateur qui l'appelle est celle d'un utilisateur autorisé pour l'échange et, dans ce cas, stocke la clé publique en argument ;
une troisième fonction (*Fct C*) comprenant une première instruction vérifiant que l'adresse de portefeuille de l'utilisateur qui l'appelle est bien celle stockée par la première fonction et retournant dans ce cas à l'utilisateur la clé publique stockée par la seconde fonction, et une seconde instruction vérifiant que l'adresse de portefeuille de l'utilisateur qui l'appelle est bien celle stockée par la seconde fonction et retournant dans ce cas à l'utilisateur la clé publique stockée par la première fonction ; et que

    (i) le premier utilisateur génère (201) une première clé privée éphémère (*a*) et une première clé publique éphémère (*P_a*) correspondante au moyen d'un cryptosystème asymétrique ;
    (ii) le second utilisateur génère (202) une seconde clé privée éphémère (*b*) et une seconde clé publique éphémère (*P_b*) correspondante au moyen dudit cryptosystème asymétrique ;
    (iii) le premier utilisateur forme (211) une première transaction (*T_A*) contenant la première clé publique éphémère et la transmet à l'adresse du contrat intelligent, l'adresse du portefeuille du premier utilisateur ainsi que la première clé publique éphémère étant alors stockées dans le contrat intelligent, le bloc contenant le contrat intelligent étant ensuite miné ;
    (iv) le second utilisateur forme (212) une seconde transaction (*T_B*) contenant la seconde clé publique éphémère et la transmet à l'adresse du contrat intelligent, l'adresse du portefeuille du second utilisateur ainsi que la seconde clé publique éphémère étant alors stockées dans le contrat intelligent, le bloc contenant le contrat intelligent étant ensuite miné ;
    (v) le premier utilisateur forme (221) une requête sous la forme d'une troisième transaction et l'envoie à l'adresse du contrat intelligent, la seconde instruction de la troisième fonction du contrat intelligent lui retournant alors la seconde clé publique éphémère ;
    (vi) le second utilisateur forme (222) une requête sous la forme d'une troisième transaction et l'envoie à l'adresse du contrat intelligent, la seconde instruction de la troisième fonction du contrat intelligent lui retournant alors la première clé publique éphémère ;

(vii) le premier utilisateur calcule (231) le produit de la première clé privée éphémère (*a*) avec la seconde clé publique éphémère ($P_b$) et le second utilisateur calcule (232) le produit de la seconde clé privée éphémère (*b*) avec la première clé publique éphémère ($P_a$) pour générer une clé secrète commune ($k_{ab}$).

2. Méthode d'échange de clés selon la revendication 1, **caractérisée en ce que** la première fonction du contrat intelligent comprend en second argument l'adresse de portefeuille de l'utilisateur autorisé pour l'échange et que la première transaction transmet l'adresse de portefeuille du second utilisateur comme second argument à la première fonction.

3. Méthode d'échange de clés selon la revendication 1 ou 2, **caractérisée en ce que**, lorsque le contrat intelligent retourne la première clé publique éphémère au second utilisateur ou la seconde clé publique éphémère au premier utilisateur, le contrat intelligent retourne aux premier et second utilisateurs la moitié du montant indiqué respectivement dans les première et seconde transactions.

4. Méthode d'échange de clés selon l'une des revendications 1 à 3, **caractérisée en ce que** le contrat intelligent comprend une quatrième fonction (*Fct timeout*) permettant au premier utilisateur de mettre fin au contrat intelligent si le second utilisateur n'a pas transmis la seconde transaction au contrat intelligent dans un délai prédéterminé (*timeout*) après que le premier utilisateur a transmis la première transaction au contrat intelligent.

5. Méthode d'échange de clés selon l'une des revendications 1 à 4, **caractérisée en ce que** la chaine de blocs est Hyperledger.

6. Méthode d'échange de clés selon l'une des revendications 1 à 4, **caractérisée en ce que** la chaine de blocs est Ethereum.

7. Méthode d'échange de clés selon la revendication 6, **caractérisée en ce qu'**au moins l'une des première, deuxième, troisième et quatrième transactions comprend un paramètre (STARTGAS) fixant la complexité maximale que l'exécution de la transaction est autorisée à consommer ainsi qu'un coût à payer en termes de complexité (GASPRICE).

**Patentansprüche**

1. Verfahren zum Austausch von Schlüsseln zwischen einem ersten Nutzer und einem zweiten Nutzer einer Blockchain von Transaktionen, wobei die Blockchain dazu ausgelegt ist, Smart Contracts zu speichern, wobei jeder Nutzer über eine Wallet-Adresse verfügt, die es ihm ermöglicht, Transaktionen zu senden und zu empfangen, **dadurch gekennzeichnet, dass** die Blockchain einen Smart Contract enthält, der umfasst:

eine erste Funktion *(Fct A)*, die mindestens einen öffentlichen Schlüssel als Argument hat und die, wenn sie von einem Nutzer aufgerufen wird, die Wallet-Adresse des aufrufenden Nutzers und den öffentlichen Schlüssel als Argument speichert;

eine zweite Funktion (*Fct B*), die mindestens einen öffentlichen Schlüssel als Argument hat und die, wenn sie von einem Nutzer aufgerufen wird, überprüft,

dass die Wallet-Adresse des aufrufenden Nutzers die eines für den Austausch autorisierten Nutzers ist, und in diesem Fall den öffentlichen Schlüssel als Argument speichert;

eine dritte Funktion (*Fct C*) mit einer ersten Anweisung, die überprüft, dass die Wallet-Adresse des aufrufenden Nutzers tatsächlich die von der ersten Funktion gespeicherte ist und in diesem Fall den von der zweiten Funktion gespeicherten öffentlichen Schlüssel an den Nutzer zurückgibt, und mit einer zweiten Anweisung, die überprüft, dass die Wallet-Adresse des aufrufenden Nutzers tatsächlich die von der zweiten Funktion gespeicherte ist und in diesem Fall den von der ersten Funktion gespeicherten öffentlichen Schlüssel an den Nutzer zurückgibt; und dass

(i) der erste Nutzer einen ersten flüchtigen privaten Schlüssel (*a*) und einen entsprechenden ersten flüchtigen öffentlichen Schlüssel ($P_a$) mit Hilfe eines asymmetrischen Kryptosystems erzeugt (201);

(ii) der zweite Nutzer einen zweiten flüchtigen privaten Schlüssel (*b*) und einen entsprechenden zweiten flüchtigen öffentlichen Schlüssel ($P_b$) mit Hilfe des genannten asymmetrischen Kryptosystems erzeugt (202);

(iii) der erste Nutzer eine erste Transaktion ($T_A$) mit dem ersten flüchtigen öffentlichen Schlüssel bildet (211) und diesen an die Adresse des Smart-Contracts übermittelt, wobei die Wallet-Adresse des ersten Nutzers und der erste flüchtige öffentliche Schlüssel dann im Smart-Contract gespeichert werden und der Block, der den Smart-Contract enthält, dann ausgeblendet wird;

(iv) der zweite Nutzer eine zweite Transaktion ($T_B$) mit dem zweiten flüchtigen öffentlichen Schlüssel bildet (212) und diesen an die Adresse des Smart-Contracts übermittelt, wobei die Wallet-Adresse des zweiten Nutzers und der zweite flüchtige öffentliche Schlüssel dann im Smart-Contract gespeichert werden und der Block, der den Smart-Contract enthält, dann ausgeblendet wird;
(v) der erste Nutzer eine Anfrage in Form einer dritten Transaktion bildet (221) und sie an die Adresse des Smart-Contracts sendet, wobei die zweite Anweisung der dritten Funktion des Smart-Contracts ihm dann den zweiten flüchtigen öffentlichen Schlüssel zurückgibt;
(vi) der zweite Nutzer eine Anfrage in Form einer dritten Transaktion bildet (222) und sie an die Adresse des Smart-Contracts sendet, wobei die zweite Anweisung der dritten Funktion des Smart-Contracts ihm dann den ersten flüchtigen öffentlichen Schlüssel zurückgibt;
(vii) der erste Nutzer das Produkt des ersten flüchtigen privaten Schlüssels ($a$) mit dem zweiten flüchtigen öffentlichen Schlüssel ($P_b$) berechnet (231) und der zweite Nutzer das Produkt des zweiten flüchtigen privaten Schlüssels ($b$) mit dem ersten flüchtigen öffentlichen Schlüssel ($P_a$) berechnet (232), um einen gemeinsamen geheimen Schlüssel ($k_{ab}$) zu erzeugen.

2. Verfahren zum Austausch von Schlüsseln nach Anspruch 1,
**dadurch gekennzeichnet, dass** die erste Funktion des Smart-Contracts als zweites Argument die Wallet-Adresse des für den Austausch autorisierten Nutzers enthält und die erste Transaktion die Wallet-Adresse des zweiten Nutzers als zweites Argument an die erste Funktion übermittelt.

3. Verfahren zum Austausch von Schlüsseln nach Anspruch 1 oder 2,
**dadurch gekennzeichnet**, dassdann, wenn der Smart-Contract den ersten flüchtigen öffentlichen Schlüssel an den zweiten Nutzer oder den zweiten flüchtigen öffentlichen Schlüssel an den ersten Nutzer zurückgibt, der Smart-Contract dem ersten und zweiten Nutzer die Hälfte des in der ersten bzw. zweiten Transaktion angegebenen Betrags zurückgibt.

4. Verfahren zum Austausch von Schlüsseln nach einem der Ansprüche 1 bis 3, **dadurch gekennzeichnet, dass** der Smart-Contract eine vierte Funktion (*Fct timeout*) enthält, die es dem ersten Nutzer ermöglicht, den Smart-Contract zu kündigen, wenn der zweite Nutzer die zweite Transaktion nicht innerhalb einer vorgegebenen Zeitspanne (*timeout*) nach Übertragung der ersten Transaktion an den Smart-Contract durch den ersten Nutzer an den Smart-Contract übermittelt hat.

5. Verfahren zum Austausch von Schlüsseln nach einem der Ansprüche 1 bis 4, **dadurch gekennzeichnet, dass** es sich bei der Blockchain um Hyperledger handelt.

6. Verfahren zum Austausch von Schlüsseln nach einem der Ansprüche 1 bis 4, **dadurch gekennzeichnet, dass** es sich bei der Blockchain um Ethereum handelt.

7. Verfahren zum Austausch von Schlüsseln nach Anspruch 6,
**dadurch gekennzeichnet, dass** mindestens eine der ersten, zweiten, dritten und vierten Transaktion einen Parameter (STARTGAS) enthält, der die maximale Komplexität festlegt, die die Ausführung der Transaktion aufwenden darf, sowie einen in Bezug auf die Komplexität zu zahlenden Preis (GASPRICE).

## Claims

1. A method for exchanging keys between a first user and a second user of a transaction blockchain, the blockchain being adapted to store smart contracts, each user having a portfolio address enabling him/her to emit and receive transactions, **characterised in that** the blockchain contains a smart contract comprising:

   a first function (*Fct A*) having as an argument at least one public key and which, when invoked by a user, stores the portfolio address of the user invoking it as well as the public key as an argument;
   a second function (*Fct B*) having as an argument at least one public key and which, when invoked by a user, checks that the portfolio address of the user invoking it is that of a user permitted for exchange and, in this case, stores the public key as an argument;
   a third function (*Fct C*) comprising a first instruction checking that the portfolio address of the user invoking it is actually that stored by the first function and returning in this case to the user the public key stored by the second function, and a second instruction checking that the portfolio address of the user invoking it is actually that stored by the second function and returning in this case to the user the public key stored by the first function; and that

   (i) the first user generates (201) a first ephemeral private key ($a$) and a first corresponding ephemeral public key ($P_a$) by

means of an asymmetric cryptosystem;

(ii) the second user generates (202) a second ephemeral private key ($b$) and a second corresponding ephemeral public key ($P_b$) by means of said asymmetric cryptosystem;

(iii) the first user forms (211) a first transaction ($T_A$) containing the first ephemeral public key and transmits it to the address of the smart contract, the portfolio address of the first user as well as the first ephemeral public key being then stored in the smart contract, the block containing the smart contract being subsequently mined;

(iv) the second user forms (212) a second transaction ($T_B$) containing the second ephemeral public key and transmits it to the address of the smart contract, the portfolio address of the second user as well as the second ephemeral public key being then stored in the smart contract, the block containing the smart contract being subsequently mined;

(v) the first user forms (221) a request as a third transaction and sends it to the address of the smart contract, the second instruction of the third function of the smart contract then returning thereto the second ephemeral public key;

(vi) the second user forms (222) a request as a third transaction and sends it to the address of the smart contract, the second instruction of the third function of the smart contract then returning thereto the first ephemeral public key;

(vii) the first user calculates (231) the product of the first ephemeral private key ($a$) with the second ephemeral public key ($P_b$) and the second user calculates (232) the product of the second ephemeral private key ($b$) with the first ephemeral public key ($P_a$) to generate a common secrete key ($k_{ab}$).

2. The method for exchanging keys according to claim 1, **characterised in that** the first function of the smart contract comprises as a second argument the portfolio address of the user permitted for exchange and **in that** the first transaction transmits the portfolio address of the second user as a second argument to the first function.

3. The method for exchanging keys according to claim 1 or 2, **characterised in that**, when the smart contract returns the first ephemeral public key to the second user or the second ephemeral public key to the first user, the smart contract returns to the first and second users half the amount indicated in the first and second transactions respectively.

4. The method for exchanging keys according to one of claims 1 to 3, **characterised in that** the smart contract comprises a fourth function (*Fct timeout*) enabling the first user to terminate the smart contract if the second user did not transmit the second transaction to the smart contract within a predetermined time (*timeout*) after the first user has transmitted the first transaction to the smart contract.

5. The method for exchanging keys according to one of claims 1 to 4, **characterised in that** the blockchain is Hyperledger.

6. The method for exchanging keys according to one of claims 1 to 4, **characterised in that** the blockchain is Ethereum.

7. The method for exchanging keys according to claim 6, **characterised in that** at least one of the first, second, third and fourth transactions comprises a parameter (STARTGAS) setting the maximum complexity that the transaction execution is permitted to consume as well as a cost to be paid in terms of complexity (GASPRICE).

Alice                                                                                                    Bob

Dérivation d'une adresse                                                                  Dérivation d'une adresse
de portefeuille éphémère                                                                 de portefeuille éphémère
depuis la parent master                                                                  depuis la parent master
key d'Alice                                                                                      key de Bob

Child public key $P_a$                                                                       Child public key $P_b$
@wallet_a                                                                                         @wallet_b

@wallet_a Alice                                          @wallet_b Bob
Compte Alice                                               Compte Bob

$T_a$

110 {
| INPUT | OUTPUT |
|---|---|
| @wallet_a Alice | @wallet_b Bob – montant |
| | @wallet_a Alice – solde |

Transaction                                                                                 Transaction
confirmée                                                                                     confirmée

@wallet_a Alice                                          @wallet_b Bob
Compte Alice                                               Compte Bob

$T_b$

Scan du registre                                                                            Scan du registre
(block explorer ou                                                                          (block explorer ou
blockchain.info)                                                                            blockchain.info)
Lecture de $P_b$                                                                             Lecture de $P_a$
(fourni pour le script                                                                      (fourni pour le script
de déverrouillage)                                                                          de déverrouillage)

| INPUT | OUTPUT |
|---|---|
| @wallet_b Bob | @wallet_a Alice – montant |
| | @wallet_b Bob – solde |

} 120

Calcul de $a.P_b$                                                                          Calcul de $b.P_a$

**Fig. 1**

EP 3 506 557 B1

@walletAlice

Smart Contract

@walletBob

**Fct A(@walletBob, $P_a$)**
write @walletAlice (msg.sender)
write @walletBob
write $P_a$

**201** | Generate $P_a$ / a

**202** | Generate $P_b$ / b

**211** | $T_A\left(@\,wallet\,Bob, P_a\right)$

**212** | $T_B\left(@\,wallet\,Alice, P_b\right)$

**Fct B($P_b$)**
check if @walletBob (msg.sender)
write $P_b$

**Fct C**
check if @walletBob (msg.sender)
　return($P_a$)
check if @walletAlice (msg.sender)
　return($P_b$)

**221** | $T_{AC}\left(P_b\right)$

**222** | $T_{BC}\left(P_a\right)$

**Fct timeout**
check if @walletAlice (msg.sender)

**231** | Calculate   a. $P_b$

**232** | Calculate   b. $P_a$

## Fig. 2

EP 3 506 557 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE A.M. ANTONOPOULOS.** Mastering Bitcoin. 2015

- Authenticated key exchange over Bitcoin. **DE MC CORRY et al.** Security Standardisation Research. Lecture Notes in Computer Science. Springer, 2015, vol. 9497